# EUROPEAN PATENT SPECIFICATION

(11) **EP 1 265 148 B1**
(45) Date of publication and mention of the grant of the patent: **02.02.2005**
(21) Application number: 02100677.0
(22) Date of filing: 07.06.2002
(51) Int. Cl.: G06F 13/24, G06F 15/167

(54) **Using software interrupts to manage communication between data processors**
Verwendung von Software-Unterbrechungsausnahmen in der Verwaltung von Übertragungen zwischen Prozessoren
Gestion de communication entre processeurs utilisant des interruptions logicielles

(30) Priority: 08.06.2001 US 877320
(43) Date of publication of application: 11.12.2002
(73) Proprietor: Texas Instruments Incorporated, Dallas, Texas 75251 (US)
(72) Inventor: Gary, Scott Paul, 93111, Santa Barbara (US)
(74) Representative: Holt, Michael

(56) References cited:
- WO-A-96/29656
- GB-A- 2 195 038
- US-A- 4 209 839
- US-A- 4 698 753
- US-A- 5 530 597
- "MC68681 DUAL ASYNCHRONOUS RECEIVER/TRANSMITTER (DUART) Advance Information" MOTOROLA SEMICONDUCTORS, September 1985 (1985-09), page 4/15,4/18,4/21-24 XP002206049
- ANONYMOUS: "Interrupt Pulse Mask Enable" IBM TECHNICAL DISCLOSURE BULLETIN, vol. 31, no. 1, 1 June 1988 (1988-06-01), pages 396-398, XP002206050 New York, US

## Description

### FIELD OF THE INVENTION

The invention relates generally to data processing and, more particularly, to communication between data processors.

### BACKGROUND OF THE INVENTION

Data processing systems (including single-chip systems) which utilize one or more host processors (for example microprocessors) and one or more co-processors (for example further microprocessors or digital signal processors) under control of the host processor(s) are well known in the art. In such systems, the co-processor is typically configured to perform desired functions by storing associated program information in a ROM (or other program memory) associated with the co-processor. Message passing communication between the host processor and co-processor is typically accomplished by one processor interrupting the other processor whenever the one processor has a message to send to the other processor. Disadvantageously, this can result in an undesirably large number of interrupts to the processors, which can produce an unacceptably high interrupt (i.e., overhead) processing load for the processors. Such an interrupt processing load disadvantageously utilizes processor resources which could otherwise be used for performing functional operations of the data processing system.

It is therefore desirable to provide for reductions in interrupt overhead processing in communication between data processors.

US patent no. 4,698,753 discloses a single chip multiprocessor device for interfacing between two processors by connection to their bus systems, the device having random access memory selectively accessible by the processors under the control of an arbitration latch. Data and address registers for the two processors are selectively connectible to the random access memory through multiplexers controlled by the arbitration latch. Standard techniques (control and status registers) are used for configuring interrupt hardware via software. A hardware interrupt is generated on "OR"ing of the different interrupt conditions.

According to the present invention, communication between data processors is accomplished by using a software interrupt which moves a message along a message path that supports communication between the data processors. The software interrupt is configurable to trigger in response to every condition being met, thereby advantageously permitting the message to be passed either immediately or upon occurrence of a predetermined condition.

### BRIEF DESCRIPTION OF THE DRAWINGS

FIGURE 1 diagrammatically illustrates pertinent portions of exemplary embodiments of a data processing system according to the invention.
FIGURE 2 diagrammatically illustrates exemplary embodiments of the RM Server of FIGURE 1.
FIGURE 3 illustrates in tabular format exemplary server functions which are supported by the RM Server of FIGURES 1 and 2.
FIGURES 4-10 illustrate exemplary embodiments of the Messenger of FIGURE 2 in greater detail.
FIGURE 11 illustrates in tabular format an example of an RPC command packet format according to the invention.
FIGURE 12 illustrates in tabular format an example of a packet format utilized by the Dispatcher of FIGURE 2 to reply to the Resource Manager of FIGURE 1.
FIGURE 13 summarizes the use of the reply fields of FIGURE 12 for each of the server functions of FIGURE 3. FIGURE 14 illustrates in tabular format examples of the return codes of FIGURES 12 and 13.
FIGURE 15 illustrates an example of an RPC command packet format for the RMS_writeMemory function of FIGURE 3.
FIGURE 16 diagrammatically illustrates a further exemplary embodiment of the system of FIGURE 1 wherein the GPP and DSP are located remotely from one another.
FIGURE 17 illustrates exemplary operations which can be performed by the embodiments of FIGURES 1 and 16.
FIGURE 18 diagrammatically illustrates exemplary interactions between exemplary embodiments of the GPP, the Messenger and the Host Driver of FIGURES 1, 2, 4 and 10.
FIGURES 18A-18F illustrate exemplary operations which can be performed by the embodiments of FIGURES 1, 2, 4, 10 and 18.
FIGURE 19 illustrates an exemplary software interrupt object according to the invention.

### DETAILED DESCRIPTION

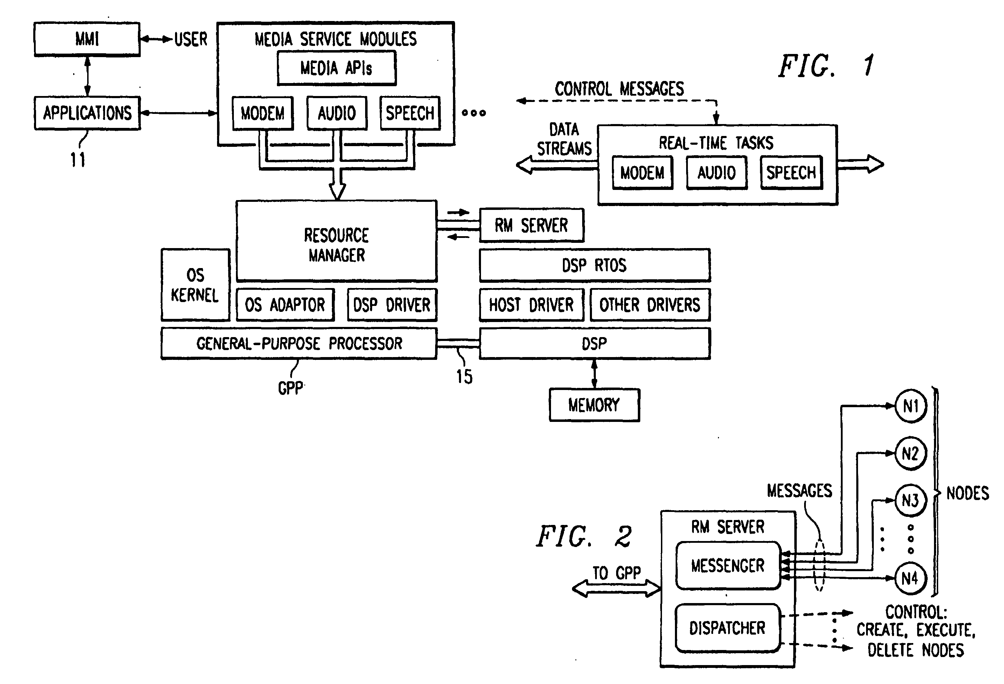

Exemplary embodiments of a data processing system according to the invention are shown diagrammatically in Figure 1.

In this system there is a General Purpose Processor GPP (e.g. a microprocessor) serving as a host processor. The GPP is connected to one or more DSPs acting as co-processors. End-user applications 11 or drivers on the GPP make calls into media service modules. These media service modules use a Resource Manager (RM) to manage DSP resources. The Resource Manager is responsible for: dynamically instantiating DSP resources to meet allocation requests; monitoring DSP resources; dynamically loading DSP code as needed; and implementing policies for managing DSP resources when there are conflicting requests. In various embodiments, the Resource Manager can also be responsible for tasks such as selecting a particular DSP device, statically loading a base code image to the DSP, starting and stopping the DSP, and implementing data streaming. The Resource Manager sits on top of a GPP OS (operating system) adaptation layer, and a DSP (link) driver for communicating with the DSP. A man-machine interface (MMI), for example a keyboard/keypad, a visual display, etc., permits communication between the applications 11 and a user. Examples of the FIGURE 1 system include cellular telephones, laptop computers, engineering workstations and set-top boxes.

The following terms are used herein:
Node - an abstraction for a block of related code and data. In one embodiment, four types of signal processing nodes are defined: Message Nodes, Task Nodes, xDAIS Socket Nodes, and Device Nodes.
Message Node - This is a basic, minimal processing element, with a basic messaging capability with other nodes, and back to the GPP. A Message node need not be a task in the DSP's RTOS, (e.g., it might execute as a software interrupt), and it does not need to support device independent streaming I/O (STRM).
Task Node - This enhanced message node exists as an independent execution thread in the DSP's RTOS (in some RTOSs this thread is a "task", in other RTOSs this may be a "process"). Task nodes support device independent streaming I/O with other nodes, and with the GPP.
xDAIS Socket Node - An xDAIS socket node is an enhanced task node that provides a framework, or housing for an xDAIS-compliant algorithm. The socket node facilitates data transfer from the algorithm to other nodes, or to the GPP.
Device Node - A device node manages either a physical DSP peripheral device, or implements a software device, (e.g., a communication path between two task nodes). Device nodes that manage a peripheral device encapsulate low-level hardware and communication details.
Task - an independent execution thread or process, that conceptually runs in parallel with other tasks within the same application.
Device Driver - a software module that encapsulates low-level hardware or communication details, and translates device-independent I/O requests into device-dependent actions.
Stream - a device-independent mechanism used to exchange buffers of data using device-dependent drivers.
Three Phase Execution Model - a programming model where a node's code is broken into three separate phases corresponding to the key periods of its life cycle:
   - Create - allocate all resources needed by the node;
   - Execute - perform real-time signal processing;
   - Delete - free all resources created for the node.

On the DSP there is a real-time operating system (RTOS) at the foundation, and a Host (link) Driver that is used to communicate with the GPP. On top of the DSP RTOS sits an RM Server. The primary duty of the RM Server is to dynamically create, execute, and destroy signal processing nodes on the DSP, under Resource Manager control. In the diagram "modem", "audio", and "speech" are signal processing nodes that have been launched on the DSP by the RM Server. Other exemplary RM Server duties include altering node priorities, responding to Resource Manager configuration commands and status queries, and routing messages between the GPP and individual nodes. The RM Server uses a dedicated stream to receive commands from the Resource Manager, and a dedicated stream to send responses back to the Resource Manager.

Nodes can exchange data buffers with one another, and with the GPP, via device-independent stream I/O. Nodes also exchange control, status, and application-specific messages with the GPP, via the RM Server.

Examples of DSP targets for the RM Server include: TMS320 C54x and TMS320 C55x from Texas Instruments. Examples of RTOS targets for the RM Server are: TI's DSP/BIOS-II, and Enea's OSE.

The RM Server is partitioned into two separate components, corresponding to the two primary functions of the server: a Dispatcher and a Messenger. The Dispatcher is responsible for setup, launch, and tear-down of individual nodes, as well as providing a general remote-procedure call (RPC) mechanism that the Resource Manager on the GPP can use to run DSP code. The Messenger is responsible for routing control, status, and application-specific messages between nodes and the GPP. Typically the Dispatcher will run at a low priority in the DSP RTOS, while the Messenger will run at a high priority, so that it can pass high priority messages to high priority nodes. Figure 2 is a conceptual block diagram of exemplary embodiments of the RM Server.

The basis of the RM Server Dispatcher design is a remote-procedure call mechanism. Each command from the Resource Manager to the Dispatcher will include a DSP function address of a server function to be executed, along with arguments. The (RPC-invoked) server functions are defined with specific signatures and duties that are the same for all DSP RTOSs. In some embodiments, server functions (internally) make native RTOS calls, and will therefore not be directly portable to another RTOS.

For example, assume that the Resource Manager wants to create a new task node. It sends a command to the RM Server Dispatcher that includes the address of an RMS_createNode server function, along with a structure that includes specific details about the task node to be created. Exemplary RMS_createNode function duties are: create a task node environment structure, create a message queue for the task node to receive commands from the GPP, create a semaphore for message notification, create the task node thread in an "inactive" state, call the task's specific create function, and respond to the GPP with the returned status code. The RMS_createNode function that is invoked on the DSP implements these duties as appropriate for the RTOS being used.

The RPC mechanism with RTOS-specific server functions provides efficiency and flexibility:
- It minimizes use of DSP-side resources; the RM server just executes functions as it is told to by the Resource Manager.
- It eliminates the need for a translation layer running on the DSP that takes a generic request and translates it into a sequence of RTOS-specific API calls. The RM server functions are small and efficient, and make native RTOS calls.

The Dispatcher RPC mechanism exists as a task of the DSP RTOS (e.g. task RMS_rpc as described hereinbelow). It blocks its own execution until a new command has arrived from the Resource Manager. On wakeup it will read the command and call the specific server function. It will then block waiting for a new command.

The Dispatcher RPC mechanism described above is prior art with respect to the present invention.

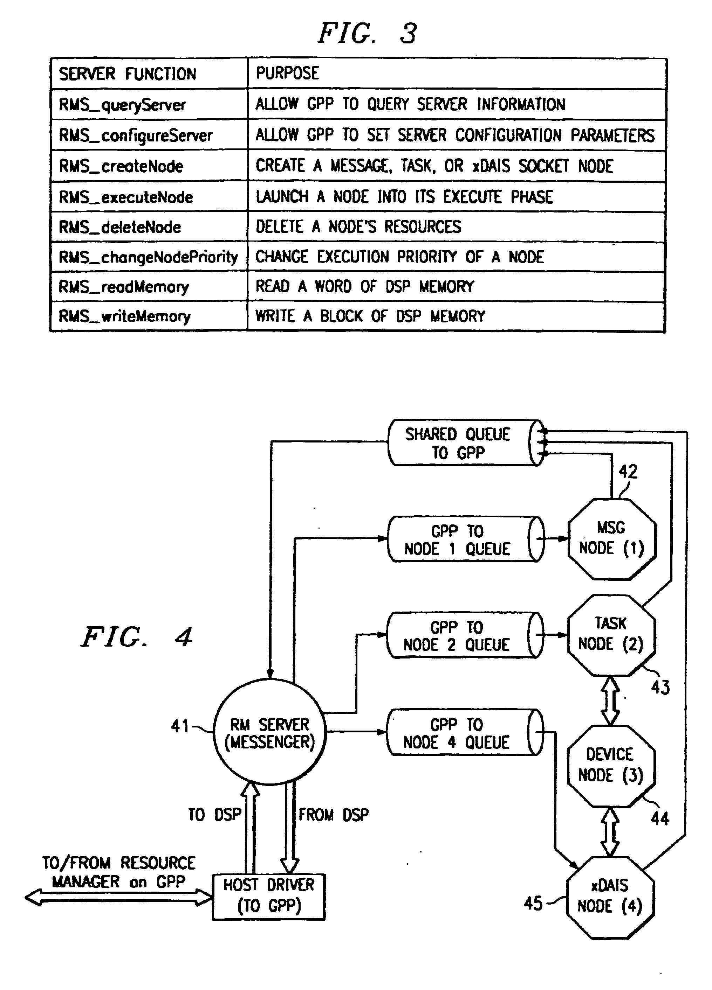

FIGURE 3 illustrates RPC functions according to exemplary embodiments of the invention. These functions represent advantageous improvements over the prior art. According to the invention, individual server functions can be dynamically loaded to the target (co-processor) when needed, and the memory can be reclaimed when the functions are no longer needed. The present invention provides for extensibility; such as shown in server functions in FIGURE 3, and other server functions (e.g., RMS_availableMemory, or RMS_CPULoad, etc.), can be added without affecting the existing RM Server functionality. These exemplary server functions are described in more detail later hereinbelow.

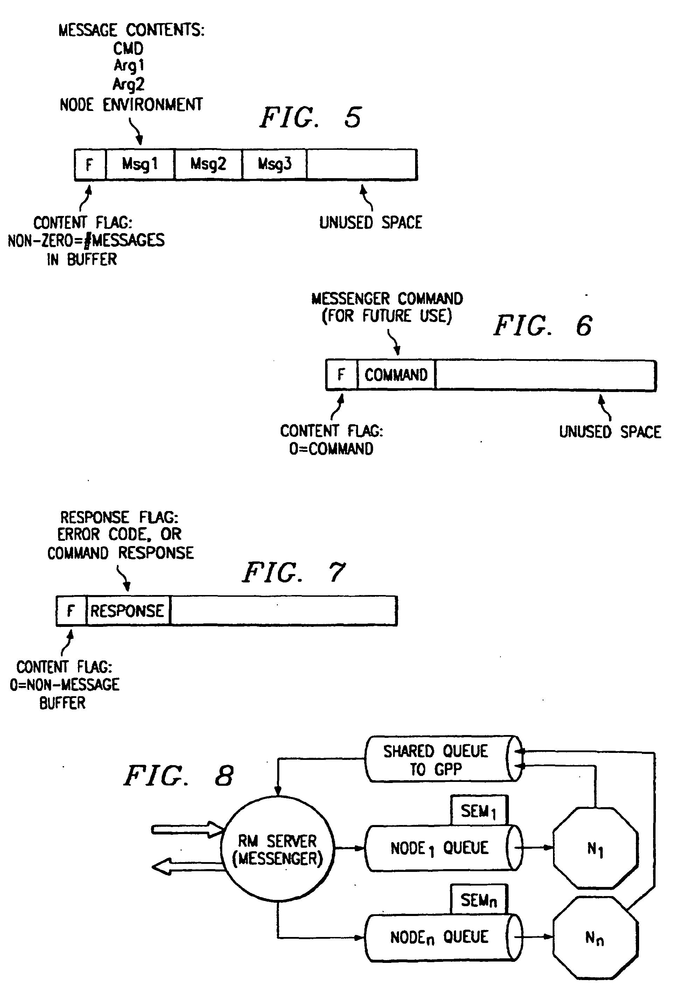

As shown in FIGURE 4, the RM Server Messenger 41 is used to route control, status, and application-specific messages between the GPP and individual nodes. It serves as a router distributing messages to individual nodes, and passing queued messages from nodes back to the GPP.

In FIGURE 4 there is one Message node 42, one Task node 43, one Device node 44, and one xDAIS Socket Node 45. Some nodes have a dedicated message queue from the Messenger, and use a shared queue to send messages back to the GPP. Note that Device nodes have no connection to the Messenger. Nodes may also have application-specific STRM streams (not shown in FIGURE 4) to the GPP through the host driver, but those streams are independent of the messaging paths.

In some embodiments, the messenger 41 is implemented as two software interrupts (SWIs). Some reasons for implementing the Messenger as SWIs are:
- SWIs inherently run at high priority, allowing the Messenger to route high priority messages to high priority tasks.
- SWIs are more efficient than using tasks. Using a task for the Messenger would mean a full task context switch when a task node posts a message to the GPP, and wakes up the (high-priority) Messenger task. Likewise, there would be a task context switch when the Messenger is done, back to the task that posted the message.
- SWI efficiency is similar to that of a software-triggered interrupt service routine (ISR), since the ISR would need to save/restore C registers to call the Messenger. Some SWIs have a built-in mailbox feature that allows conditional posting of the SWI, and SWIs are also much easier to configure across platforms than a normal ISR (because on different platforms different CPU interrupts will be used, and there may be a problem finding an available hardware interrupt on some platforms).

Using SWIs requires special attention to pre-emption of a user's time-critical tasks. Simply implementing the Messenger as an SWI would cause messaging to always be higher priority than user tasks, (i.e., whenever a message got posted by a task, the Messenger would activate). For some applications this may be acceptable (and desirable too), but for others using a lot of messaging between the GPP and DSP, and time-critical tasks, this could be a problem. To deal with this, the invention takes advantage of a feature of software interrupts that allows for multiple conditions to be met before an SWI is actually run. For example, an SWI management function (referred to herein as SWI_andn) can be called to clear specific bits in the SWI's mailbox. When all bits in the mailbox are cleared, the SWI is ready to run, so the management function (SWI_andn) places the SWI on its corresponding priority queue. When the SWI runs, it will run to completion, at a higher priority than tasks (similar to a hardware ISR). The SWI's mailbox bits can be set to initial values (stored within the SWI object) automatically at a point in time immediately before the SWI starts running.

These features of SWIs provide a mechanism to control when message transport actually occurs. For example, a simple configuration option could allow an application developer to choose between:
- allowing messaging to happen whenever a message is ready - by specifying a default mailbox value with a single bit that gets cleared when a node calls its send function, or when a message arrives from the GPP, or
- allowing another entity on the DSP (e.g., a control task at a low priority) to control when the messages get routed by the Messenger - by specifying a default mailbox value that has two bits: the first bit is used as described above, and the second bit is posted by the control task when it wants to allow messages to flow.

Messages sent to nodes on the DSP are sent on the "ToDSP" path from the Resource Manager to the Messenger. Multiple messages to different nodes can be "batched" together in a single data buffer from the GPP, as shown in Figure 5. The first word of the buffer is used to indicate the contents of the buffer: a non-zero value indicates that the remaining data in the buffer is a set of messages destined for nodes. In Figure 5, F would be 3, indicating 3 messages are held in the buffer.

Each message includes three words: Cmd, Arg1, Arg2 (described more below); plus a pointer to the environment structure of the node that is to receive the message. Note that nodes which can receive messages contain in their environment an object that holds a handle to both the node's message queue and semaphore.

The same format shown in Figure 5 is used to send messages from nodes back to the GPP. The 'F' flag will tell the GPP how many messages are contained in the buffer, and in each message the 'Node Environment' pointer will allow the Resource Manager to determine which node sent the message to it.

It may sometimes be desirable to send configuration or other commands directly from the Resource Manager to the Messenger itself. To do this, the first word of the buffer can be set to zero, indicating that the remainder of the buffer contains a command from the Resource Manager directly to the Messenger (i.e., the buffer has no messages for nodes, but a message for the Messenger itself). This is shown in Figure 6.

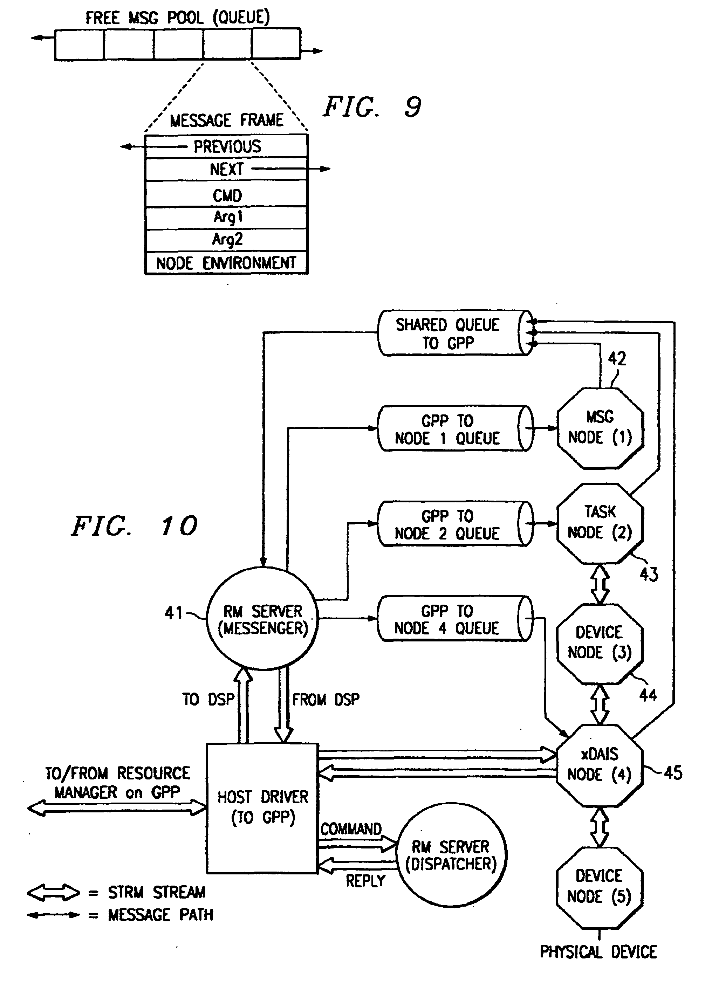

If the Messenger encounters an error while trying to send messages (e.g., there are no more DSP message frames available), or to allow the Messenger to respond to a (future) RM command, the first word of the response buffer can be set to zero, indicating that the buffer from the DSP does not contain messages from nodes, but an error or status response as shown in FIGURE 7.

FIGURE 8 shows more details of the communication between the Messenger and individual nodes in some exemplary embodiments. Each of the dedicated node queues has a companion semaphore handle that allows DSP node functions to register a semaphore to be posted when a new message is deposited in the node's queue. The shared queue to the GPP does not have a companion semaphore handle. When a function is invoked by a node to send a message to the GPP, that function will copy the message into the shared queue to the GPP, and then post the Messenger's SWI.

A pool of message frames is maintained by the Messenger to send messages to individual nodes. In the example of FIGURE 9, message frames are fixed length, with 6 elements: Previous Link, Next Link, Cmd, Arg1, Arg2, and Node Environment. Simple messages to/from the GPP can be contained entirely within the three elements of the message: the Cmd field is used to designate the type of message, and determines the meaning of Arg1 and Arg2. For example, an exit message that the Resource Manager sends to a node to tell it to shut down only uses the Cmd field. For larger messages, Arg1 and Arg2 can represent, for example, a data pointer and a size, respectively.

The "Node Environment" field is not visible to the application, but is used for message routing: for messages to nodes, the Resource Manager uses this field to indicate to the Messenger which node the Message is destined for; for messages from nodes, this field tells the Resource Manager on the GPP which node sent the message.

The number of frames allocated for the Free MSG Pool is a design choice: allocating too many frames is wasteful, but not allocating enough means that the Messenger (or individual nodes) will need to block, or detect failure and retry later. One approach is to use the node configuration information held for each node (e.g. in a configuration database) to specify the maximum number of simultaneous in-use messages required by the node. As the node is created on the DSP, the Dispatcher will allocate the indicated number of message frames, and place them on the Free MSG Pool queue. As the Dispatcher deletes a node's resources, it will retrieve the same number of frames from the pool, and free them. For a node that does no application specific messaging, only one frame is needed to support a command/response protocol (e.g. for the RM to send an exit command to the node, and thereafter for a response to go back to the RM).

In some embodiments, an additional RPC function allows the RM to tell the RM server to allocate (or free) message frames on the fly.

When the Messenger receives a message from the GPP for a specific node it gets a free message frame structure from the Free MSG Pool, copies the three elements from the GPP message (Cmd, Arg1, Arg2) into the message frame, and then puts the message frame into the destination node's queue, increments the message count, and (optionally) posts the node's semaphore to allow notification to the node that a message is ready. The node's retrieve function will retrieve the message frame from the queue, the three elements of the message will be copied from the frame into a message structure associated with the node's retrieve function, and the frame retrieved from the queue will be put back on the Free MSG Pool queue.

Similarly, when a node wants to send a message to the GPP, it will fill a message structure and then call its send function. The node's send function will get a free message frame from the Free MSG Pool, copy the three elements of the message to the frame, set the node environment field, place the frame into the Shared Queue to GPP, and then post the Messenger's SWI.

When the Messenger retrieves a frame from the shared queue it will copy the message elements into a message buffer to go back to the GPP, and place the frame from the shared queue back in the Free MSG Pool. If additional messages are in the shared queue the Messenger can retrieve them as well. When the buffer to go to the GPP is full, or when no more messages are in the shared queue, the Messenger places the message buffer into the 'FromDSP' path to the GPP.

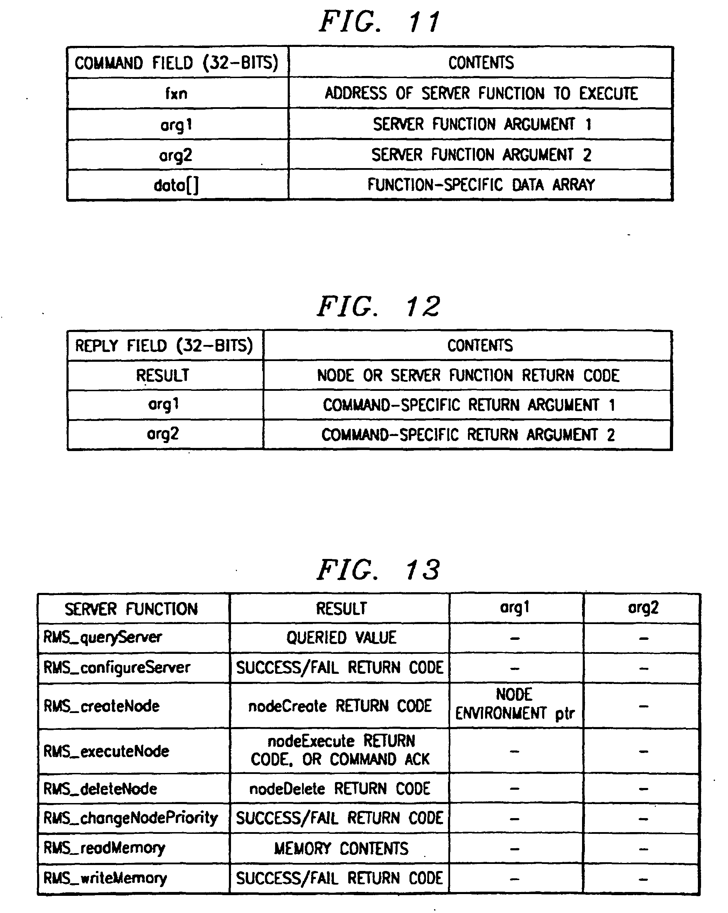

FIGURE 10 illustrates all communication paths between the Resource Manager, the RM Server, and individual nodes, for a sample application. STRM streams are used to communicate between the Resource Manager and the RM Server Dispatcher; and can also be used by applications to communicate between nodes, and between nodes and the GPP. As indicated diagrammatically in FIGURE 10, and as described herein, streams typically carry large blocks of data between tasks or processors, whereas message paths typically carry smaller amounts of data, for example, fixed-length control or status messages.

A 'Command' stream transports commands from the Resource Manager to the Dispatcher; and a 'Reply' stream transports Dispatcher responses back to the Resource Manager. The data formats of these transactions are described below. In some embodiments, for each command to the Dispatcher there will be a reply back to the Resource Manager.

A 'ToDSP' path transports messages from the Resource Manager to the Messenger; and a 'FromDSP' path transports messages back to the Resource Manager. Multiple node messages can be batched together in each buffer that traverses the 'ToDSP' and 'FromDSP' paths. Individual node messages are fixed length, but applications can overload these messages to serve as descriptors for blocks of larger data. In some embodiments, the command and reply streams can be secure, so that a user cannot easily corrupt this data.

When the RM Server Dispatcher creates a Message, Task, or xDAIS socket node, it also creates a dedicated queue to pass messages to the node. The message queue can be used to transport control messages from the Resource Manager directly to the node, and also to transport application-specific data to the node from user applications running on the GPP.

The techniques of the invention are applicable to many GPP and DSP combinations. For example, possible GPPs include: ARM7, ARM9, MIPS, Motorola DragonBall, and Intel x86; and possible DSPs include: TMS320C54x, TMS320C55x, TMS320C6x, and TMS320C3x (from Texas Instruments Incorporated). The GPPs and DSPs can have different native word sizes, and a GPP might be simultaneously controlling DSPs of different native word sizes running different RTOSs. To simplify the GPP and DSP interface code, target-independent message formats can be used. A 32-bit word size can be chosen, for example, as the standard messaging interchange unit. Processors with smaller word sizes can adapt to the larger word sizes.

For example, the TMS320 C54x has a 16-bit native word size. Older members of the C54x family are limited to 16-bit program addresses (and have 16-bit function pointers), but newer C54x processors also support 24-bit extended addressing of program space (requiring larger pointers and structure alignment). Without a standard interchange size, the GPP would need to know what mode the C54x is operating in (e.g., through a configuration database), in order to format pointers and structures appropriately. This adaptation requires extra code and complexity. To simplify the interface, a default 32-bit word size can be chosen for messaging between the Resource Manager and the RM Server.

An exception to the above rule is string passing. Strings sent by the Resource Manager to the RM Server (e.g., STRM device names), can be packed to the native DSP character size, and NULL terminated. For example, a 32-bit word will hold 2 characters for a C54x, and 4 characters for a C6x. The native character size will be constant within a given DSP family - it won't vary like addressing modes will. Allowing character packing will significantly reduce command structure sizes, and will be efficient for the DSP to interpret at runtime. The Resource Manager can determine the DSP character size from a configuration database, or via the RMS_queryServer function. The size of data elements when streaming data between the GPP and DSP will depend on the DSP's capabilities. The GPP might look in a configuration database, or use RMS_queryServer to determine this.

An example of the Resource Manager-to-Dispatcher RPC command packet format is shown in FIGURE 11. The data[] array size will vary depending on the server function being invoked. For example, for a function like RMS_deleteNode that has no attached data, the size will be zero; but for a command like RMS_createNode that has an attached node arguments structure, this size might be several hundred words. The command packet frame size for the STRM stream between the Resource Manager and the Dispatcher should be large enough to accommodate the data requirements of all server functions.

Each server function can have two arguments (argl and arg2), and the Dispatcher RPC mechanism can attach a third argument to pass a pointer to the function-specific data array. For example, for a command packet containing (fxn, arg1, arg2, data0, data1, ..), the RM Server will invoke the function as: (*fxn) (argl, arg2, &data0)

An example of the Dispatcher-to-Resource Manager reply packet format is shown in FIGURE 12. The result field is used to pass the return code from either a node function, or an RM Server function, back to the Resource Manager. For example, when RMS_deleteNode is invoked, the result field will contain the node's delete function return value (e.g., RMS_EOK, or RMS_EMEMFREE, etc.). For non-node RPC commands like RMS_queryServer, the result field is the return code of the server function. The arg1 field is used to pass a command-specific argument back to the Resource Manager. Initially, arg1 will only be used by RMS_createNode, to pass a pointer to the node's environment back to the Resource Manager. The arg2 field is an additional command-specific argument for use as desired.

FIGURE 13 summarizes the usage of the FIGURE 12 reply fields for each of the RPC functions of FIGURE 3. In FIGURE 13, a dash means that the reply field is available for desired use. The reply to RMS_executeNode depends on the node type. For message nodes, the result field contains the code returned by the node's execute function. For task and xDAIS nodes, the result field can be a simple acknowledgement that the command was received.

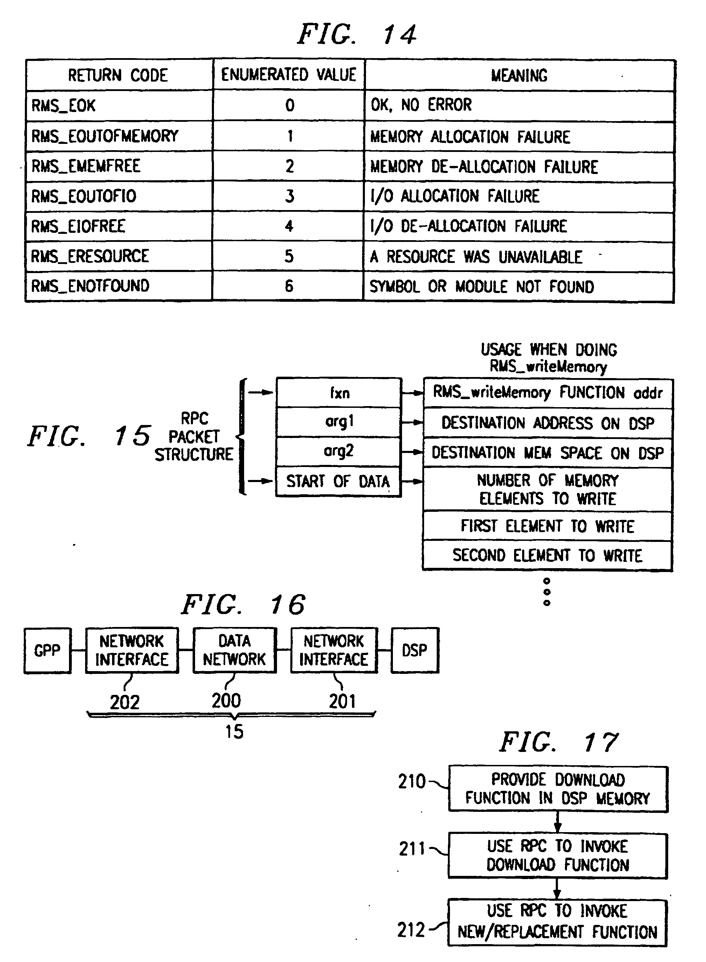

Exemplary return codes from the RM Server to the Resource Manager are enumerated in FIGURE 14.

Referring again to FIGURE 3, the RM Server RPC functions that can be invoked by a command from the Resource Manager are described below.

The RMS_queryServer function will allow the Resource Manger to query the RM Server for settings and capabilities. Examples of queries: the type of data processor (e.g. TMS320C5402, TMS320C5510, ARM7, etc.) the server is running on, the native character size, the underlying RTOS type, the server version (e.g., if the RM Server resides in ROM on the DSP and is not loaded by the GPP), the size of individual stream elements, etc.

The RMS_configureServer function will allow the Resource Manager to set configuration properties for the RM Server. An example would be setting a server mode that activates a different communication protocol to the Resource Manager.

The RMS_createNode function is invoked by the Resource Manager to create a new node on the DSP. The arguments include a pointer to a data structure that defines the node's configuration parameters, and also a pointer to the node's create-phase function. Some exemplary duties of RMS_createNode are: create a node environment structure; for Task nodes create the node's thread in an "inactive" state; fix-up the STRM definition offset arrays, turning them into pointer arrays; call the node's create-phase function; and respond to the RM with the returned status code, and the address of the node's environment structure. The above-described features and operations associated with the RMS_createNode function, and their invocation by RPC to the Dispatcher, are prior art with respect to the present invention.

According to the invention, RMS_createNode also performs the following exemplary duties: create a message queue to hold GPP messages to the node; allocate the specified number of message frames for Free MSG Pool, and place them in the pool.

The RMS_executeNode function is used by the Resource Manager to launch a node into its execute phase. The arguments include a pointer to the node's environment structure (initialized in the node's create phase), and a pointer to the node's execute-phase function. One duty of RMS_executeNode is, for Task nodes, change the node's priority level from inactive to its runtime priority. The above-described features and operations associated with the RMS_executeNode function, and their invocation by RPC to the Dispatcher, are prior art with respect to the invention.

According to the invention, RMS_executeNode also includes as an argument a pointer to a location that indicates the node type, and performs the following exemplary duties: reply to the Resource Manager to acknowledge execute commands; and for Message nodes, call the node's execute-phase function, and reply to the Resource Manager with the execute-phase function's return code.

The RMS_deleteNode function is invoked by the Resource Manager to delete a node's resources. The arguments include a pointer to the node's environment structure, and a pointer to the node's delete-phase function. Some exemplary duties of RMS_deleteNode are call the node's delete-phase function; for Task nodes, remove the node's task from the RTOS; reply to the Resource Manager that the node has been deleted; and free the node's environment structure. The above-described features and operations associated with the RMS_deleteNode function, and their invocation by RPC to the Dispatcher, are prior art with respect to the invention.

According to the invention, the RMS_deleteNode function also includes as an argument a pointer to a location that indicates the node type, and performs the following exemplary duties: remove any message frames remaining in the node's message queue and place them in the Free MSG Pool; get the number of message frames created for the node out of the message frame pool, and free them; and delete the node's message queue.

The RMS_changeNodePriority server function is used to change the runtime priority of a node (that is, change the runtime priority of a node that is already running), to suspend, resume, or simply reprioritize it. The arguments include a pointer to the environment of the node whose priority is to be changed, and the new priority level. This function can also be used to change the runtime priority of the Dispatcher itself.

The RMS_readMemory utility function allows the Resource Manager to read from DSP memory space. This can be useful, for example, when reading data from a DSP that is indirectly connected to the GPP via a network of DSPs and drivers.

The RMS_writeMemory utility function allows the Resource Manager to write a block of values (e.g., a program or data) to DSP memory space (e.g., to dynamically load code to a processor that is connected to the GPP via a network of DSPs and drivers). Note that the actual data to be written resides in a data array passed from the GPP; a size field in the array tells the DSP how many data words are in the array to be copied. An example of an RPC command packet format (see also FIGURE 11) for the RMS_writeMemory function is shown in FIGURE 15. In the FIGURE 15 example, the destination memory space identifies, for example, a memory space that is internal or external relative to the DSP.

The memory write capability provided by the RMS_writeMemory function permits extensions and modifications to server capabilities at runtime. New server functions can be dynamically downloaded at runtime and executed via the RPC mechanism. These server functions can be entirely new functions, for example additional resource and power management, or can be replacements to the functions currently residing in the DSP base image. Thus, server functions need not reside permanently in DSP memory, but rather can be downloaded when needed and, when no longer needed, the memory space can be reclaimed for other use (e.g., by downloading another server function to the same memory space). As examples, any of the functions RMS_queryServer, RMS_configureServer, RMS_changeNodePriority and RMS_readMemory can be downloaded to DSP memory by invoking RMS_writeMemory. The downloaded function can then be invoked by its corresponding RPC command.

In some exemplary embodiments, the RMS_writeMemory function can reside in the DSP base image. When the RMS_writeMemory function is invoked, a new or replacement function is downloaded into DSP memory at the location designated at arg1 and arg2 in FIGURE 15. Thereafter, when it is desired to invoke the new/replacement function, the address of the new/replacement function (already known from arg1 and arg2 in FIGURE 15) is provided to the RM Server, together with any necessary arguments and data, in a suitable RPC packet. The function's address occupies the fxn field of the RPC packet (see also FIGURE 11). The Dispatcher RPC mechanism will call the server function specified by the function address.

The above-described use of the RMS_writeMemory function to add new server functions is particularly advantageous because the new server functions can be added without modifying or otherwise affecting the functionality of the Dispatcher or already-existing server functions to which the new server functions are added. For example, and referring again to FIGURE 3, if all of the server functions illustrated in FIGURE 3 except RMS_queryServer are already existing functions on the co-processor side, then the server function RMS_queryServer can be added as a function on the co-processor side without modifying or otherwise functionally affecting the already existing server functions on the co-processor side, and without modifying or otherwise functionally affecting the Dispatcher (see also FIGURE 2). Accordingly, no "regression" testing is needed when a new server function is added. Previously existing functions are not affected by the addition of the new function, so there is no concern about retesting the Dispatcher or the pre-existing server functions.

Another exemplary application of the RPC mechanism function is to change the runtime execution priorities of running nodes, thereby facilitating dynamic resource management by the GPP. In particular, using the RPC mechanism, the Resource Manager can dynamically "pause" a DSP node, for example to lighten the DSP processing load, and then later "resume" the DSP node. The Resource Manager can also use the RPC mechanism to change the mix of node runtime execution priorities, depending upon what is currently the most important duty for the DSP. The priority of the Dispatcher itself can also be changed at runtime by the Resource Manager. In some embodiments, the function RMS_changeNodePriority calls a further function in the RTOS, which further function changes node runtime priorities as indicated by the arguments and data of the RPC packet that invoked RMS_changeNodePriority. This further function can make the runtime priority changes by, for example, changing entries in a database which indicates the runtime priority of nodes/tasks running on the DSP. The database can be accessed by a scheduler in the RTOS in conventional fashion to set the priorities of the various nodes. Thus, by changing the priority entries in the database, the runtime execution priorities of the various nodes can be changed. Similarly, the aforementioned further function called by the RMS_changeNodePriority function can modify the database to indicate that a given node is to be "paused" or "resumed". These pause and resume operations can be viewed as further instances of changes in runtime priority.

Other exemplary functions that can be invoked using the RPC mechanism include a function for modifying the message passing operation of the DSP. For example, if the messaging link between the GPP and DSP is heavily loaded, an RPC packet can be sent to the RM Server directing it to batch GPP-bound messages together instead of sending them individually. This RPC packet would include fxn = RMS_configureServer, and at least one of arg1 and arg2 will tell RMS_configureServer to effect message batching operation. As another example, if the communication path between the GPP and the DSP is found to be lossy or unreliable, the communication format and/or protocol used for message passing can be dynamically changed by invoking RMS_configureServer with arg1 and/or arg2 defined appropriately to effect the desired change.

FIGURE 16 illustrates exemplary embodiments of the invention wherein the physical data path 15 of FIGURE 1 includes a data network, for example the Internet, thereby permitting the GPP to be located remotely from the DSP. Accordingly, the above-described exemplary operations which can be performed using the RPC mechanism of the present invention can be performed across long distances if the physical data path 15 includes a data network such as illustrated at 200, and suitable network interfaces 201 and 202.

In some embodiments, the GPP and DSP of FIGURE 1 can be embedded together in a single integrated circuit chip which could also have embedded therein, for example, program memory and data memory to support operations of the GPP and the DSP. In other embodiments, a GPP such as shown in FIGURE 1 can be embedded together in an integrated circuit along with a plurality of DSPs, and can be coupled to each of the DSPs for interacting therewith in generally the same fashion as described above with respect to FIGURES 1-15. In still further embodiments, a plurality of GPPs can be embedded together in a single integrated circuit along with a plurality of DSPs, each GPP coupled to and interacting with at least one DSP in generally the same manner described above with respect to FIGURES 1-15. In other embodiments, the GPP and DSP can be provided in respectively separate integrated circuits, and can also be located remotely from one another as shown in FIGURE 16. In all embodiments described above, the GPP as host processor and the DSP(s) as co-processor(s) are only exemplary. In other embodiments, the host processor can be either a GPP or a DSP (or other special purpose processor), and the co-processor(s) can likewise be either a GPP or a DSP (or other special purpose processor).

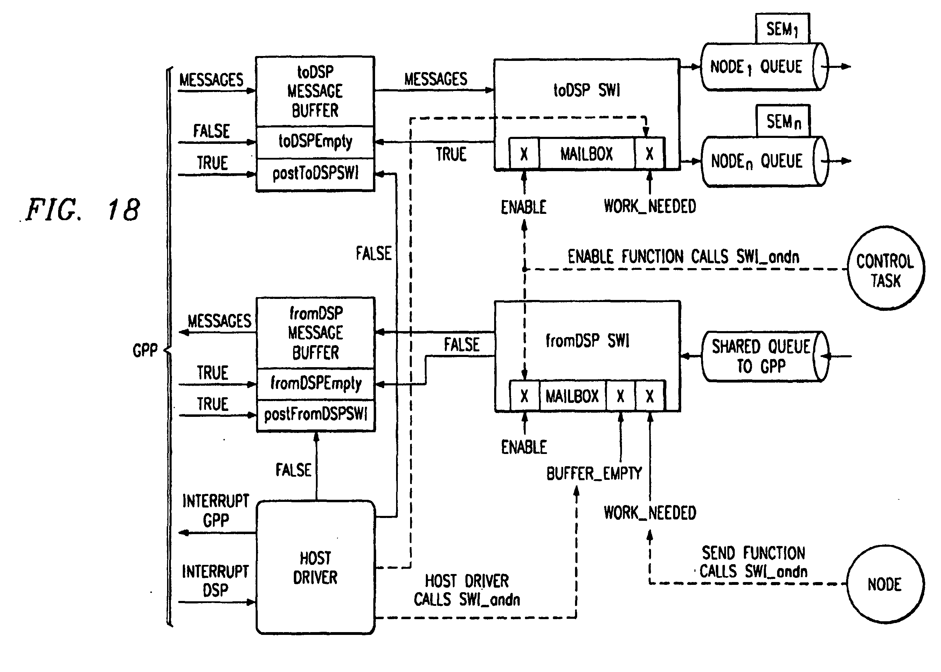

FIGURE 17 illustrates exemplary operations which can be performed by the present invention to download a new or replacement function to a data processor, for example the DSP of FIGURES 1 and 16. At 210, the download function is provided in the data processor's memory. At 211, the RPC function is used to invoke the download function, thereby downloading the new/replacement function. At 212, the RPC is used to invoke the new/replacement function.

Additional, internal RM Server functions are described below. The following internal RM Server functions are prior art with respect to the invention.

The RMS_rpc function is a simple function dispatcher. It is an infinite loop that reads Dispatcher RPC commands from the GPP, decodes them, calls the indicated server action, and then returns to the top of the loop to get the next command. It runs as a task of the RTOS, (i.e., it is the task execute function for the RM Server Dispatcher), and has no arguments or return value.

The RMS_runStub function is used to allow the RM Server to notify the Resource Manager that a specific task node has completed its execute phase. It is a small wrapper function that runs at the node's runtime priority. This stub is called by the RTOS when the node is activated, and it in turn calls the node's execute-phase function. When the execute function returns, the stub changes its own priority back to that of the RM Server Dispatcher, and then it sends a notification to the Resource Manager (on the shared queue to GPP) to signal that the execute phase is finished. It has no arguments or return value.

The RMS_replyToHost function is used to send a response back to the Resource Manager using the Dispatcher's Reply stream. Its arguments include a result code, and two command-specific arguments.

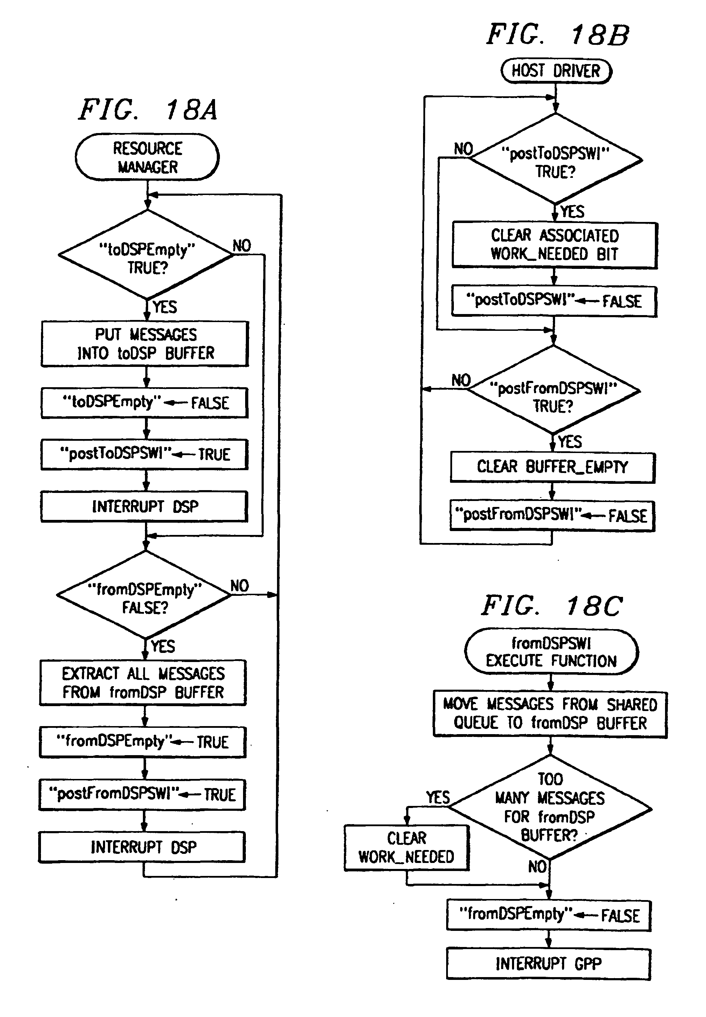

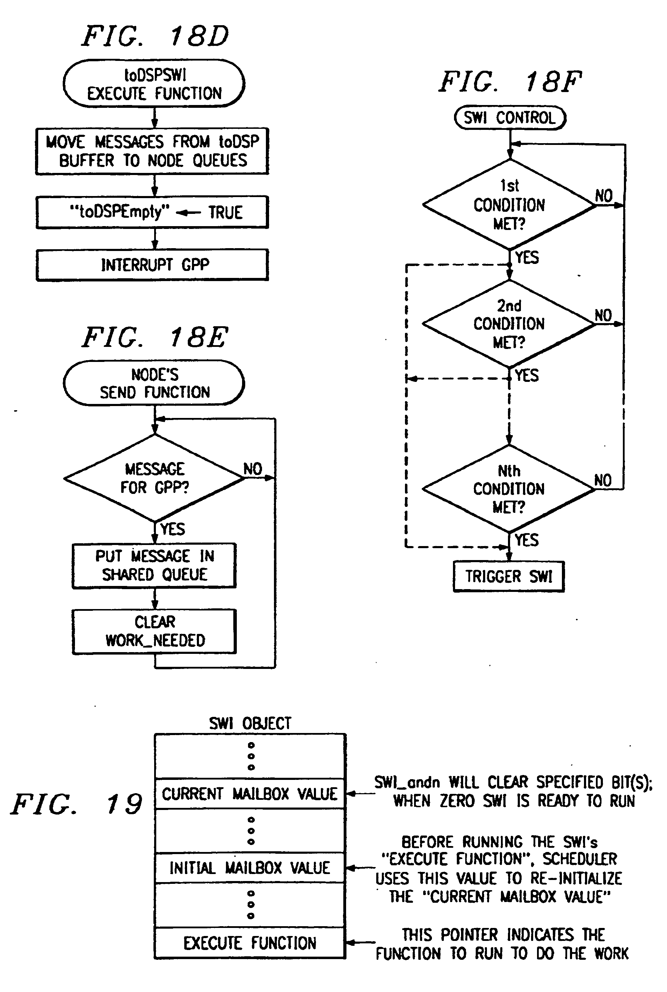

Exemplary interactions between exemplary embodiments of the GPP, the Messenger and the Host Driver are shown in FIGURE 18. Two SWIs are used to implement the Messenger, one for processing messages sent to the DSP (toDSPSWI), and one for processing messages sent from the DSP to the GPP (fromDSPSWI). The toDSPSWI mailbox has a WORK_NEEDED bit that is initialized to 1 on startup and set back to 1 automatically when (immediately before) toDSPSWI runs. When the Host Driver ISR sees that the postToDSPSWI flag has been set to TRUE, it will call SWI_andn to clear WORK_NEEDED, thereby conditionally posting toDSPSWI. After calling SWI_andn the Host Driver ISR clears the postToDSPSWI flag.

Similarly, fromDSPSWI has a WORK_NEEDED bit that is cleared when a node deposits a message into the shared queue to GPP. The node's send function calls SWI_andn to clear the WORK_NEEDED bit. The fromDSPSWI mailbox also has a BUFFER_EMPTY bit. When the Host Driver ISR sees the fromDSPEmpty flag set to TRUE, and the postFromDSPSWI flag has been asserted by the GPP, the host driver will call SWI_andn to clear the BUFFER_EMPTY bit. This second (BUFFER_EMPTY) bit means that fromDSPSWI will not be allowed to run until all previous messages to the GPP have been processed, and fromDSPEmpty is TRUE. As discussed hereinabove, the mailbox bits WORK_NEEDED and BUFFER_EMPTY can be automatically set to initial values (e.g., 1) immediately before fromDSPSWI runs.

In some embodiments, one or both SWIs can have an optional ENABLE bit in their mailbox. If these bits are initially configured to be 1, then neither SWI will run until an entity on the DSP (e.g., the Control Task shown in FIGURE 18) calls an enable function that in turn calls SWI_andn to clear the ENABLE bit and thereby allow messages to flow. When a SWI runs, its ENABLE bit will be set back to 1 automatically, so to run again, each SWI must be enabled by another call to the aforementioned enable function. The ENABLE bit coupled with the enable function allows for simple flow control of messages.

Shared memory between the GPP and DSP can be used for passing messages and signaling. To prevent message passing from interfering with data streaming, this shared memory can be, in some embodiments, distinct from that used by the Host Driver for data streams. Two buffers of shared memory are reserved: one buffer (toDSP Message Buffer) is for holding messages from the GPP to the DSP, and the other (fromDSP Message Buffer) is for holding messages from the DSP to the GPP. [In some embodiments, each message is passed as four 32-bit words, so a buffer of 33 16-bit words can hold a batch of up to 4 messages, plus the 16-bit Content Flag.]

A set of control flags is held in an additional block of shared memory. In some embodiments, each flag is a separate 16-bit word: the flag is cleared (FALSE) if 0, or set (TRUE) if non-zero. The flag toDSPEmpty indicates whether there are unread DSP-bound messages in the toDSP buffer. This flag is set to FALSE by the Resource Manager after it has put messages into toDSP; it is set to TRUE by toDSPSWI when it (toDSPSWI) has read all messages from the buffer and passed them to the appropriate node queues. The flag fromDSPEmpty indicates whether there are unread GPP-bound messages in the fromDSP buffer. This flag is set to FALSE by fromDSPSWI when it (fromDSPSWI) has placed new messages into fromDSP; it is set to TRUE by the Resource Manager when it has read the messages from fromDSP. The flag postToDSPSWI is set to TRUE by the Resource Manager after it has placed new messages into toDSP. When the Host Driver sees this flag set to TRUE it will call SWI_andn to conditionally post toDSPSWI (if all mailbox bits are zero), and then the Host Driver ISR will set the flag back to FALSE. The flag postFromDSPSWI is set to TRUE by the Resource Manager after it has extracted messages from fromDSP. When the Host Driver ISR sees this flag set to TRUE it will call SWI_andn to clear BUFFER_EMPTY and thereby conditionally post fromDSPSWI, and will then set the flag back to FALSE.

When the Resource Manager has messages to send to nodes it first waits until the toDSPEmpty flag is TRUE, indicating that all previously-sent messages to the DSP have been accepted. It then places a message (or a block of messages) into the toDSP buffer and sets toDSPEmpty to FALSE. It then sets the postToDSPSWI flag to TRUE, and generates an interrupt to the Host Driver.

When toDSPSWI runs it extracts messages from the toDSP buffer, places them in the appropriate node queues, optionally signals the node semaphores, and then sets toDSPEmpty to TRUE, and interrupts the GPP, which alerts the GPP that it can send some more messages.

In the other direction, when the GPP has finished reading a batch of messages in fromDSP it will set fromDSPEmpty and postFromDSPSWI to TRUE, and interrupt the DSP. When the Host Driver ISR sees these flags set it will call SWI_andn to clear BUFFER_EMPTY and thereby conditionally post fromDSPSWI.

When a node posts a message to go to the GPP, the node's send function will call SWI_andn to clear WORK_NEEDED and thereby conditionally post fromDSPSWI.

In some embodiments, the software interrupt fromDSPSWI will only run if both WORK_NEEDED and BUFFER_EMPTY have been cleared (i.e., SWI will not be allowed to run until it can do its work without the possibility of needing to block). When fromDSPSWI runs, it will pull messages from the shared queue to the GPP, put the messages into the fromDSP buffer, and then set fromDSPEmpty to FALSE and interrupt the GPP.

The GPP will generate an interrupt to the Host Driver on the DSP for the following notifications: (1) when new messages have been placed into toDSP, the GPP will set postToDSPSWI to TRUE, and toDSPEmpty to FALSE, then interrupt the DSP; and (2) when all messages in the fromDSP buffer have been read, the GPP will set postFromDSPSWI to TRUE, and fromDSPEmpty to TRUE, and then interrupt the DSP.

The DSP will generate an interrupt to the GPP for the following notifications: when new messages have been put into fromDSP and fromDSPEmpty has been set to FALSE; and when all messages in toDSP have been read and toDSPEmpty has been set to TRUE.

Pseudo-code is shown below for examples of the above-described software interrupts used by the Messenger. toDSP SWI

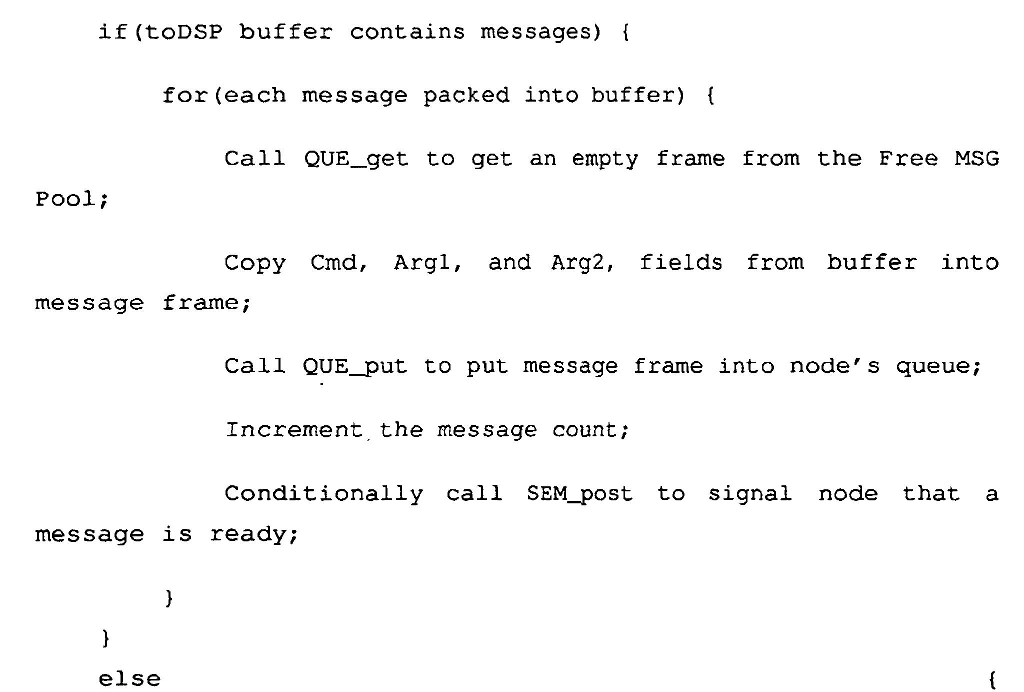

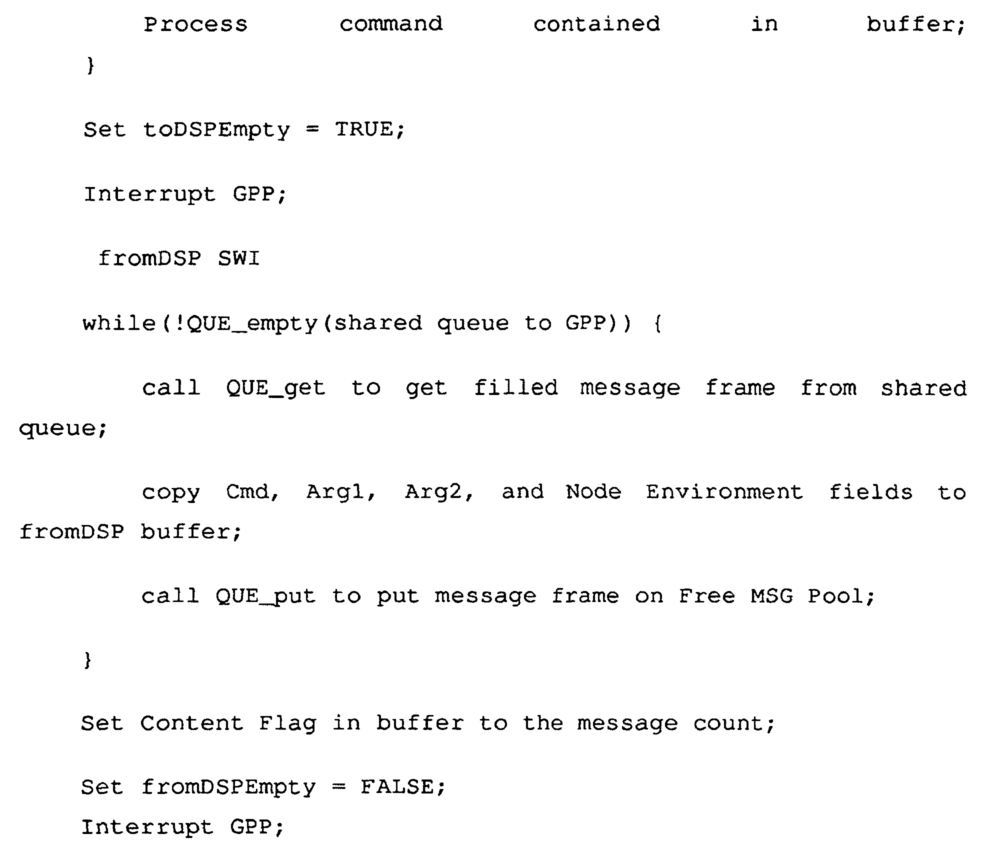

FIGURE 19 illustrates an exemplary software interrupt object, or data structure, that can be stored, for example, in the memory of FIGURE 1. The software interrupt object contains the state of the software interrupt. The software interrupt object of FIGURE 19 includes three elements. A "current mailbox value" (corresponding to the contents of the mailbox of FIGURE 18) tracks the state of readiness of the SWI. The SWI_andn function is called to clear specific bits of the "current mailbox value". When all bits of the "current mailbox value" are cleared, the SWI is ready to run, and becomes "posted" to a scheduler. When the posted SWI has the highest priority of other posted SWIs or tasks, the scheduler will (1) set the "current mailbox value" back to the "initial mailbox value" held within the SWI object, and (2) call the "execute function" of the SWI. When the "execute function" returns, the scheduler will proceed to run the next highest priority SWI or task. This SWI will not run again until all bits of the "current mailbox value" are again cleared, for example via calls to SWI_andn. The scheduler that services the SWIs can be the task scheduler described above, or can be a separate scheduler that schedules SWIs separately from the task scheduling operations of the above-described task scheduler.

By re-initializing the "current mailbox value" before running the SWI's "execute function", the scheduler enables the SWI's "execute function" to re-post the SWI. For example, if there are many messages queued to go to the GPP, and if the fromDSPSWI's "execute function" finds that it cannot place all of the queued messages into the fromDSP message buffer, then the "execute function" can call SWI_andn to clear the WORK_NEEDED bit in the "current mailbox value". By doing this, the "execute function" is asserting that one of the conditions for running the SWI again has already been detected.

Exemplary operations described above with respect to FIGURES 18 and 19 are illustrated in flow diagram format in FIGURES 18A-18E. In particular, FIGURE 18A illustrates exemplary Resource Manager operations, FIGURE 18B illustrates exemplary host driver ISR operations, FIGURE 18C illustrates exemplary operations of the fromDSPSWI execute funtion, FIGURE 18D illustrates exemplary operations of the toDSPSWI execute function and FIGURE 18E illustrates exemplary operations of a node's send function.

FIGURE 18F illustrates the configurable feature of the aforementioned SWIs. As shown, an SWI will be triggered to run only when the necessary configuration conditions are met, for example by clearing corresponding mask bits in the SWI's mailbox. The broken lines show that the trigger conditions can be single or compound in nature.

The message passing operations described above with respect to FIGURES 18-18F permit efficient message passing between processors, with either high or low priority, while still providing a way to control the message flow in order to minimize disruption of normal processing. In typical conventional systems, message passing between data processors at a high priority usually leads to many interrupts between the processors. Because this may be unacceptable in many systems, the message passing operation associated with FIGURES 18-18F advantageously addresses this problem by defining a configurable messaging architecture that allows the user to choose the appropriate operation for their system. The user can choose to pass messages as fast as possible (with the corresponding load on the processors), or can choose to throttle the message flow to occur in batches, at periodic intervals, or under direct control of another processing entity.

Although messages are queued as they become ready, the messages will only flow when all conditions have been met to run the corresponding software interrupt. The conditions that allow the software interrupt to run are configurable, for example by virtue of the mask bits in the software interrupt mailboxes. As each condition is met (see also FIGURE 18F), its corresponding bit in the mask is cleared. When all bits in the mask are clear, the software interrupt will run. In some embodiments, the mask bits generally correspond to the decision blocks of FIGURE 18F. For example, one of the bits in the mask can be used as a receiver ready bit (i.e., the processor to receive the messages has signaled that it has read all previous messages and is ready for more) as exemplified by the BUFFER_EMPTY bit. Another of the bits in the mask can be used as a flow control bit, as exemplified by the ENABLE bit. Another entity on the processor (e.g., another control task, or even an interrupt service routine triggered by another processor) can permit the flow of currently queued messages by clearing the flow control bit.

By varying the mask bits of the software interrupt, a system designer can implement message passing using a variety of conditions, with or without flow control. For example, for periodic message flow, a clock function can be configured to enable the flow at particular intervals, for example by clearing the ENABLE bit of the software interrupt. For transferring messages as fast as possible, the designer can disable the flow control bit, so that the software interrupts will preempt other code to pass messages as soon as they become available. For low priority routing, a low priority task can post the flow control bit to cause the batch of queued messages to be transferred to the other processor after other higher priority tasks have executed.

The techniques of FIGURES 18-18F exploit inherent conditional execution capabilities of an operating system construct, for an efficient message flow control mechanism. Although the exemplary implementations of FIGURES 18-18F use software interrupts, the technique can also be applied to other operating systems, for example using constructs such as event flags.

Although exemplary embodiments of the invention are described above in detail, this does not limit the scope of the invention, as defined in the appended claims, which can be practiced in a variety of embodiments.

## Claims

1. A method of communicating between data processors (GPP, DSP) , comprising:
on one of the data processors (DSP), configuring a software interrupt (toDSP SWI, fromDSP SWI) that is configurable for triggering in response to every of at least two predetermined conditions being met;
triggering the software interrupt in response to every of the at least two predetermined conditions being met; and
the software interrupt, when triggered, moving a message (Msg 1, Msg2, Msg3) along a message path that supports communication between the data processors.

2. The method of Claim 1, wherein one said predetermined condition indicates that a message (Msg 1, Msg2, Msg3) is available for the software interrupt (toDSP SWI, fromDSP SWI) to move.

3. The method of Claim 1, wherein one said predetermined condition indicates that said software interrupt (toDSP SWI, fromDSP SWI) is available for enabling.

4. The method of Claim 1, wherein said configuring step includes loading mask bits (ENABLE, BUFFER_EMPTY, WORK_NEEDED) of the software interrupt with predetermined bit values.

5. A data processing apparatus, comprising:
first and second data processors (GPP, DSP) , one of said data processors operable for implementing a software interrupt (toDSP SWI, fromDSP SWI) that is configurable for triggering in response to every of at least two predetermined conditions being met;
a message path coupled to said data processors for supporting communication therebetween; and
said software interrupt operable when triggered for moving a message (Msg 1, Msg2, Msg3) along said message path.

6. A data processing apparatus (GPP, DSP) , comprising:
a message path for coupling to a further data processing apparatus (GPP, DSP) to support communication with the further data processing apparatus;
data processing circuitry coupled to said message path for implementing a software interrupt (toDSP SWI, fromDSP SWI) that is configurable for triggering in response to every of at least two predetermined conditions being met; and
said software interrupt operable when triggered for moving a message (Msg 1, Msg2, Msg3) along said message path.

7. The apparatus of Claims 5 or 6, including a mailbox (MAILBOX) having a plurality of mask bits (ENABLE, BUFFER_EMPTY, WORK_NEEDED) which permit said configuration of said software interrupt (toDSP SWI, fromDSP SWI), said mask bits having values which are changeable in response to predetermined events to produce said predetermined conditions.

8. The apparatus of Claims 5 or 6, wherein said message path includes an outgoing buffer (fromDSP MESSAGE BUFFER) of said one data processor (DSP) , said software interrupt (fromDSP SWI) operable when triggered for placing said message in said outgoing buffer, one of said mask bits (BUFFER_EMPTY) indicative of whether said outgoing buffer is empty.

9. The apparatus of Claims 5 or 6, wherein said message path includes an incoming buffer (toDSP MESSAGE BUFFER) of said one data processor (DSP) , said software interrupt (toDSP SWI) operable when triggered for retrieving said message from said incoming buffer.

10. The apparatus of Claims 5 or 6, provided in a single integrated circuit.

## Patentansprüche

1. Verfahren für den Datenaustausch zwischen Datenprozessoren (GPP, DSP), das umfasst:
in einem der Datenprozessoren (DSP) Konfigurieren einer Software-Unterbrechung (toDSP SWI, fromDSP SWI), die so konfigurierbar ist. dass sie in Reaktion auf die Erfüllung jeder von wenigstens zwei vorgegebenen Bedingungen ausgelöst wird; und
Auslösen der Software-Unterbrechung in Reaktion auf die Erfüllung jeder der wenigstens zwei vorgegebenen Bedingungen;
wobei die Software-Unterbrechung dann, wenn sie ausgelöst wird, eine Nachricht (Msg1, Msg2, Msg3) längs eines Nachrichtenweges, der den Datenaustausch zwischen den Datenprozessoren unterstützt, bewegt.

2. Verfahren nach Anspruch 1, bei dem eine der vorgegebenen Bedingungen angibt, dass eine Nachricht (Msg1, Msg2, Msg3) verfügbar ist, um durch die Software-Unterbrechung (toDSP SWI, fromDSP SWI) bewegt zu werden.

3. Verfahren nach Anspruch 1, bei dem eine der vorgegebenen Bedingungen angibt, dass die Software-Unterbrechung (toDSP SWI, fromDSP SWI) verfügbar ist, um freigegeben zu werden.

4. Verfahren nach Anspruch 1, bei dem der Konfigurationsschritt das Laden von Maskierungsbits (ENABLE, BUFFER_EMPTY, WORK_NEEDED) der Software-Unterbrechung mit vorgegebenen Bitwerten umfasst.

5. Datenverarbeitungsvorrichtung, mit:
einem ersten und einem zweiten Datenprozessor (GPP, DSP), wovon einer so betreibbar ist, dass er eine Software-Unterbrechung (toDSP SWI, fromDSP SWI) implementiert, die so konfigurierbar ist, dass sie in Reaktion auf die Erfüllung jeder von wenigstens zwei vorgegebenen Bedingungen ausgelöst wird;
einem Nachrichtenweg, der mit den Datenprozessoren gekoppelt ist, um den Datenaustausch zwischen ihnen zu unterstützen; und
einer Software-Unterbrechung, die in der Weise wirkt, dass sie, wenn sie ausgelöst wird, eine Nachricht (MSG1, MSG2, MSG3) längs des Nachrichtenweges bewegt.

6. Datenverarbeitungsvorrichtung (GPP, DSP), mit
einem Nachrichtenweg für die Kopplung mit einer weiteren Datenverarbeitungsvorrichtung (GPP, DSP), um den Datenaustausch mit der weiteren Datenverarbeitungsvorrichtung zu unterstützen; und
einer Datenverarbeitungsschaltungsanordnung, die mit dem Nachrichtenweg gekoppelt ist, um eine Software-Unterbrechung (toDSP SWI, fromDSP SWI) zu implementieren, die so konfigurierbar ist, dass sie in Reaktion auf die Erfüllung jeder von wenigstens zwei vorgegebenen Bedingungen ausgelöst wird;
wobei die Software-Unterbrechung bewirkt, dass sie, wenn sie ausgelöst wird, eine Nachricht (MSG1, MSG2, MSG3) längs des Nachrichtenweges bewegt.

7. Vorrichtung nach Anspruch 5 oder 6, die eine Mailbox (MAILBOX) mit mehreren Maskierungsbits (ENABLE, BUFFER_EMPTY, WORK_NEEDED) besitzt, die die Konfiguration der Software-Unterbrechung (toDSP SWI, fromDSP SWI) ermöglichen, wobei die Maskierungsbits Werte besitzen, die in Reaktion auf vorgegebene Ereignisse veränderbar sind, um die vorgegebenen Bedingungen zu erzeugen.

8. Vorrichtung nach Anspruch 5 oder 6, bei der der Nachrichtenweg einen Ausgangspuffer (fromDSP MESSAGE BUFFER) des einen Datenprozessors (DSP) umfasst, wobei die Software-Unterbrechung (fromDSP SWI) so betreibbar ist, dass sie, wenn sie ausgelöst wird, die Nachricht in dem Ausgangspuffer anordnet, wobei eines der Maskierungsbits (BUFFER_EMPTY) angibt, ob der Ausgangspuffer leer ist.

9. Vorrichtung nach den Ansprüchen 5 oder 6, bei der der Nachrichtenweg einen Eingangspuffer (toDSP MESSAGE BUFFER) des einen Datenprozessors (DSP) umfasst, wobei die Software-Unterbrechung (toDSP SWI) so betreibbar ist, dass sie, wenn sie ausgelöst wird, die Nachricht aus dem Eingangspuffer wiedergewinnt.

10. Vorrichtung nach den Ansprüchen 5 oder 6, die in einer einzigen integrierten Schaltung vorgesehen ist.

## Revendications

1. Procédé de communication entre des processeurs de données (GPP, DSP), comprenant :
sur l'un des processeurs de données (DSP), la configuration d'une interruption logicielle (toDSP SWI, fromDSP SWI) qui est configurable pour être déclenchée en réponse à chacune d'au moins deux conditions prédéterminées qui sont remplies ;
le déclenchement de l'interruption logicielle en réponse à chacune des au moins deux conditions prédéterminées qui sont remplies ; et
la transmission d'un message (Msgl, Msg2, Msg3) par l'interruption logicielle, lorsqu'elle est déclenchée, le long d'un chemin de message qui supporte la communication entre les processeurs de données.

2. Procédé selon la revendication 1, dans lequel une dite condition prédéterminée indique qu'un message (Msgl, Msg2, Msg3) est disponible pour sa transmission par l'interruption logicielle (toDSP SWI, fromDSP SWI).

3. Procédé selon la revendication 1, dans lequel une dite condition prédéterminée indique que ladite interruption logicielle (toDSP SWI, fromDSP SWI) est disponible pour être activée.

4. Procédé selon la revendication 1, dans lequel ladite étape de configuration comprend le chargement de bits de masque (ENABLE, BUFFER_EMPTY, WORK_NEEDED) de l'interruption logicielle avec des valeurs de bits prédéterminées.

5. Dispositif de traitement de données, comprenant :
un premier processeur de données et un second processeur de données (GPP, DSP), l'un desdits processeurs de données pouvant fonctionner pour mettre en oeuvre une interruption logicielle (toDSP SWI, fromDSP SWI) qui est configurable pour être déclenchée en réponse à chacune d'au moins deux conditions prédéterminées qui sont remplies ;
un chemin de message couplé aux dits processeurs de données pour supporter la communication entre ceux-ci ; et
ladite interruption logicielle pouvant fonctionner, lorsqu'elle est déclenchée, pour transmettre un message (Msgl, Msg2, Msg3) le long dudit chemin de message.

6. Dispositif de traitement de données (GPP, DSP), comprenant :
un chemin de message pour le couplage à un autre dispositif de traitement de données (GPP, DSP) pour supporter la communication avec l'autre dispositif de traitement de données ;
un circuit de traitement de données couplé au dit chemin de message pour mettre en oeuvre une interruption logicielle (toDSP SWI, fromDSP SWI) qui est configurable pour être déclenchée en réponse à chacune d'au moins deux conditions prédéterminées qui sont remplies ; et
ladite interruption logicielle pouvant fonctionner, lorsqu'elle est déclenchée, pour transmettre un message (Msgl, Msg2, Msg3) le long dudit chemin de message.

7. Dispositif selon la revendication 5 ou 6, comprenant une boîte aux lettres (MAILBOX) ayant une pluralité de bits de masque (ENABLE, BUFFER_EMPTY, WORK_NEEDED) qui permettent ladite configuration de ladite interruption logicielle (toDSP SWI, fromDSP SWI), lesdits bits de masque ayant des valeurs qui peuvent être changées en réponse à des événements prédéterminés pour produire lesdites conditions prédéterminées.

8. Dispositif selon la revendication 5 ou 6, dans lequel ledit chemin de message comprend une mémoire tampon de sortie (fromDSP MESSAGE BUFFER) d'un dit processeur de données (DSP), ladite interruption logicielle (fromDSP SWI) pouvant fonctionner lorsqu'elle est déclenchée pour mettre ledit message dans ladite mémoire tampon de sortie, l'un desdits bits de masque (BUFFER_EMPTY) indiquant si ladite mémoire tampon de sortie est vide.

9. Dispositif selon la revendication 5 ou 6, dans lequel ledit chemin de message comprend une mémoire tampon d'entrée (toDSP MESSAGE BUFFER) d'un dit processeur de données (DSP), ladite interruption logicielle (toDSP SWI) pouvant fonctionner lorsqu'elle est déclenchée pour extraire ledit message de ladite mémoire tampon d'entrée.

10. Dispositif selon la revendication 5 ou 6, fourni dans un seul circuit intégré.
